Europäisches Patentamt

European Patent Office

Office européen des brevets

(11) Publication number: **0 255 372 B1**

# EUROPEAN PATENT SPECIFICATION

(45) Date of publication of patent specification: **27.02.91**

(51) Int. Cl.⁵: **E05B 49/00, G06K 7/08**

(21) Application number: **87306726.8**

(22) Date of filing: **29.07.87**

(54) **Magnetic card reader.**

(30) Priority: **30.07.86 GB 8618540**

(43) Date of publication of application:
**03.02.88 Bulletin 88/05**

(45) Publication of the grant of the patent:
**27.02.91 Bulletin 91/09**

(84) Designated Contracting States:
**BE CH DE ES FR IT LI NL SE**

(56) References cited:
**WO-A-81/02603**
**GB-A- 1 244 985**
**US-A- 3 619 570**
**US-A- 3 772 574**
**US-A- 4 258 346**

(73) Proprietor: **NEWMAN TONKS SECURITY LIMITED**
**Quarry Wood Industrial Estate**
**Aylesford Maidstone, ME20 7NA Kent(GB)**

(72) Inventor: **Gillham, Peter James**
**The Well House Frittenden**
**Cranbrook Kent(GB)**

(74) Representative: **Harrison, Gordon Donald et al**
**FORRESTER & BOEHMERT Widenmayer-**
**strasse 4/I**
**D-8000 München 22(DE)**

## Description

This invention relates to magnetic card readers of the kind employed, for example, to release a locking device in response to the presentation of an appropriately encoded magnetic card. Whilst such readers are mainly used for this purpose, it will be appreciated that they may be used for other purposes, such as allowing access to information or the operation of equipment.

Known magnetic card readers which have been developed for use in controlling locks are typified by British Patent specification No. 1,586,800 in that the reader is embodied within a lockset, and the magnetic card is used to actuate an unlocking mechanism mechanically. In such systems, a plurality of magnetic elements are held by an associated magnetic cover member in one state in which they engage mechanically with a locking plate, and a magnetically coded card has to be inserted between the cover member and the locking plate to disengage the magnetic elements from the locking plate to allow the latter to be moved by engagement with the magnetic card.

A major disadvantage of such systems is that the magnetic card has to be inserted into a slot for this purpose, and this makes the lockset prone to vandalism, e.g. by forcing objects into the slot, and also provides a route by which the lock itself may be forced.

One object of the invention is to provide a magnetic card reader which does not require the card to be inserted into a slot. A further object of the invention is to provide a magnetic card reader which provides an output signal which can be utilised to operate remote equipment.

Moreover GB 1244985 describes a magnetic card reader in which a magnetically encoded card can be read by juxtaposing the card against a plurality of magnetic elements which are movable against a bias so as to effect contact between pairs of electrical contacts provided in the reader. The biasing means by which the magnetic elements are normally held out of contact with the contacts comprise soft iron rings which attract the magnetic elements and the magnetic elements are movable between a position in which no part of the magnetic element extends between the contacts and a position in which the magnetic elements bridge respective pairs of contacts.

This arrangement is constructionally complex and, necessarily, expensive to produce.

A further object of the present invention is therefore to provide a magnetic card reader the construction of which is greatly simplified without being any less secure than the prior art arrangements.

According to the invention we provide a magnetic card reader comprising a housing having therein an assembly of magnetic elements associated with respective electric contacts and a guide for the reception of a magnetically encoded card adjacent to said assembly, said guide comprising an exposed area external to the housing arranged to receive said card in flat juxtaposition to the housing and said assembly being disposed immediately adjacent to said area, characterised in that the assembly of magnetic elements comprises a pair of spaced apart electrically conductive members and, extending between said conductive members, a plurality of said magnetic elements biased by respective spring means into positions in which each of said elements establishes an electrical connection between said conductive members such that the two conductive members, said spring means and said magnetic elements afford a continuous electric current path which is connected in an electric circuit responsive to a predetermined condition of the card reader, the magnetic elements being held normally in contact with one of said conductive members by said spring means which are in contact with the other of said conductive members and the magnetic elements being movable out of contact with said one of the conductive members by magnetic interaction with the appropriately encoded magnetic card.

The housing may afford an aperture at one face thereof for the reception of the card in the plane of the aperture, the assembly of magnetic elements being arranged in register with said aperture so that when the card is located correctly in said aperture it is disposed in face-to-face relation with said assembly. Alternatively, the housing may be made of, or include a "window" of magnetically permeable material, and have an area visually defined thereon for the reception of the card, the assembly of magnetic elements being arranged in register with said area.

Thus, normally the two conductive members and the magnetic elements afford a continuous electric current path and can be connected in an electric circuit responsive to a predetermined condition of the card reader, the magnetic elements being movable out of contact with at least one of the conductive members by magentic interaction with the appropriately encoded magnetic card. The predetermined condition of the card reader would normally reflect an open-circuit condition for all of the magnetic elements but other arrangements are possible as mentioned in the following description.

The magnetic elements are preferably biased by spring means into contact with one of said conductive members, the latter being made of a non-magnetisable material. The magnetic card may thus be applied directly to that conductive member (although a layer of electrically insulating material may be interposed if desired) to move the magnetic elements against the spring-bias and away from the conductive member into open-circuit conditions so as to break the current path.

Unlike the previously known arrangements as described above, it is not necessary to include a magnetic cover member to interact with the magnetic elements and draw them into their "locking" positions, the magnetic elements being biased by spring means into the required "circuit completing" positions so that no such magnetic cover member is required, with the result that the magnetic card can be applied directly onto the conductive member without having to be inserted beneath a cover member.

To guard against the possibility of open-circuit conditions of the magnetic elements being produced mechanically by striking the conductive member so that the magnetic elements move away from the latter by inertia, the card reader preferably has associated therewith an electronic circuit which provides an output signal indicative of said predetermined condition of the card reader only if such condition is established and maintained for a period of time which exceeds the natural resonant frequency of the magnetic element and spring combination. In this way, the establishment of open-circuit conditions for a brief period of time will not give rise to a "lock opening" output signal from the electronic circuit, whereas the maintenance of open-circuit conditions for greater than a predetermined period of time will do so.

Additionally or alternatively an end-of-line resistor may be associated with the card reader so that when the magnetic elements are in their open-circuit conditions the reader presents a predetermined resistance to the circuit which is responsive to the reader.

The invention will now be described by way of example with reference to the accompanying drawings wherein:-

FIGURE 1 shows a transverse section through one embodiment of magnetic card reader in accordance with the invention; and

FIGURE 2 is an outline circuit diagram showing one manner in which the reader may be used to operate an electromagnetic lock.

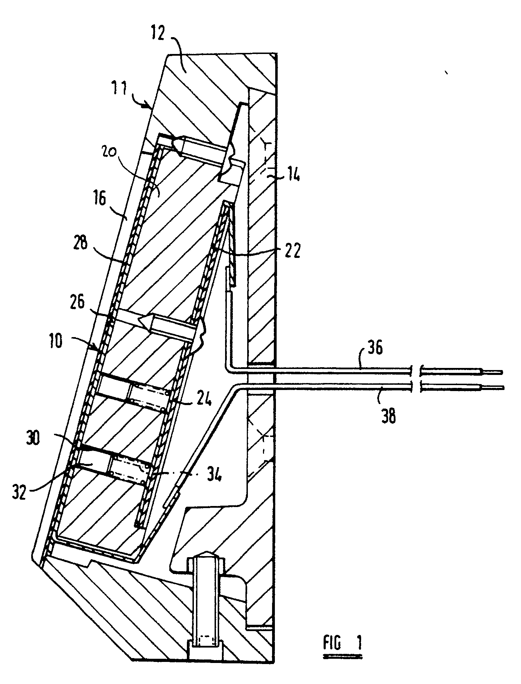

As can be seen from Figure 1, the reader comprises a detector assembly 10 mounted within a housing 11 comprising casing 12 secured to a back plate 14 adapted for mounting on any convenient surface, for example on or adjacent to a door which is fitted with an electromagnetic lock. The casing 12 includes at its forward face an aperture 16 which serves to locate a magnetically coded card (not shown) in the correct face-to-face relationship with the detector assembly 10. The detector assembly 10 need not be recessed from the forward surface of the housing 11 as shown, but could be flush therewith, in which case appropriate markings would be provided to indicate the required position of the magnetically coded card. Alternatively the housing 11, instead of being formed with the aperture 16, may include a "window" of magnetically permeable material or itself be made of such a material.

The detector assembly 10 comprises a body 20 of a electrically insulating material having, on the rearward face thereof, an electrically conductive plate 22, for example of copper, held in place if necessary by a backing plate 24. The forward face of the body 20 carries a further electrically conductive plate 26 which, in the embodiment illustrated is covered by a front plate 28 of non-magnetic stainless steel. Alternatively, the front plate may be made of electrically insulating material.

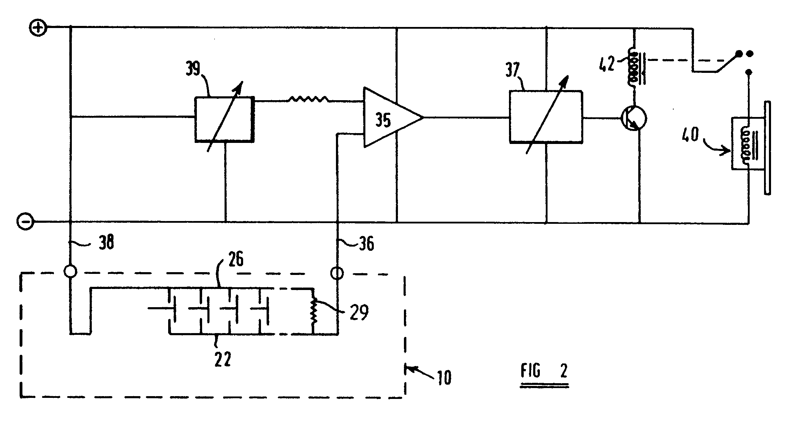

The body 20 is formed with an array of bores 30 (only two of which are shown), some or all of which house a respective small cylindrical magnet 32 and an associated biasing spring 34 whereby the magnet is biased into contact with the inner face of the front conductive plate 26. Each magnet and its associated spring are electrically conducting so as normally to establish a plurality of parallel current paths between plates 22 and 26 as represented diagrammatically in Figure 2. Conductor leads 36, 38 are attached to the respective plates, and the resistance across the leads is normally effectively zero.

It will be appreciated that the body 20 may house varying numbers of magnets in varying patterns, and the magnets may be arranged with varying polarity so as to provide a multitude of combinations. The magnetically coded card (not shown) carries a complementary pattern of magnetic spots which when the card is correctly located within the aperture 16 interact with the magnets 32 sufficiently strongly to repel them, against the force of their biasing springs, and thereby to break the electrical continuity between plates 22 and 26, thereby producing an open-circuit condition to provide an output response from the electronic circuit associated with the reader, as shown in Figure 2.

As can be seen in Figure 2, the detector assembly 10 in its most basic form provides an input to a comparator 35 which provides an output to a timer 37 which in turn energises a relay 42 for a period of time sufficient to operate an electromagnetic lock 40.

To prevent the comparator producing an output if the detector assembly 10 is mechanically struck so as to jolt the magnets briefly away from conductive plate 26, the other input of the comparator is supplied by a delay timer 39 so that the comparator does not respond to an open circuit condition on line 36 unless that condition is maintained for a period of time which is set to be greater than the natural resonant frequency of the magnet and spring combination utilised in the detector assembly 10.

To guard against operation of the lock 40 by an open-circuit condition established by severing line 36 or 38, an end of line resistance 29 may be provided, as shown in Figure 2, in parallel with the magnetic circuit elements across leads 36 and 38. In this way, when open circuit conditions are established at all the magnetic elements, the detector assembly presents to the electronic circuit a specific resistance equivalent to the value of the end-of-line resistor 40 instead of an open circuit condition. In such case the other input of the comparator may be through an equivalent resistance and the delay timer may be connected in the output of the comparator. An additional comparator may be provided in association with an alarm device so that the establishment of an open circuit condition in the detector assembly causes an alarm signal to be generated. Such an arrangement provides a safeguard against operation of the lock 40 by severing of the leads 36, 38, and also provides a further safeguard against the establishment of a spurious output to the lock timer in response to physical interference with the reader.

It will be appreciated that whilst in the above description all of the magnetic elements present an open-circuit condition in response a correctly coded card, it would be possible for the correct code to displace only some of the magnets 32. Each magnet and its associated spring may then afford a resistive connection between the two plates and accordingly the application of the correctly coded card will cause the resistance presented by the detector to change from a lower value to a higher value, the comparator then being arranged effectively to compare the resistance presented by the detector assembly to a reference value.

The resistive connection may be established by making the springs 34 of a suitable material having significant electrical resistivity, but preferably this would be achieved by replacing the conductive plate 22 by an electrically conductive member in the form of a printed circuit board or the like carrying conductive tracks associated with the respective springs, the board also carrying resistors (or other circuit elements such as capacitors) connected in series with at least some of the magnetic elements.

The conductive plate 22 may also be replaced by a printed circuit board even where resistors are not required to be associated with the magnetic elements as described in the preceding paragraph. In particular this makes it possible to incorporate in the detector assembly a switch whereby the 'combination' of the lock may be changed, by connecting in circuit different or additional magnetic elements or by disconnecting some of the magnetic elements.

Whilst, as described above, the reader is illustrated as controlling an electromagnetic lock 40, it will be appreciated that the output from the comparator may be utilised for other control purpose, such as disabling an alarm system or enabling electric or electronic apparatus in general.

## Claims

1. A magnetic card reader comprising a housing (11) having therein an assembly (10) of magnetic elements (32) associated with respective electric contacts and a guide for the reception of a magnetically encoded card adjacent to said assembly (10), said guide comprising an exposed area (16) external to the housing (11) arranged to receive said card in flat juxtaposition to the housing and said assembly (10) being disposed immediately adjacent to said area, characterised in that the assembly (10) of magnetic elements (32) comprises a pair of spaced apart electrically conductive members (22,26) and, extending between said conductive members, a plurality of said magnetic elements (32) biased by respective spring means (34) into positions in which each of said elements (32) establishes an electrical connection between said conductive members (22,26) such that the two conductive members (22, 26), said spring means (34) and said magnetic elements (32) afford a continuous electric current path which is connected in an electric circuit (40, 42) responsive to a predetermined condition of the card reader, the magnetic elements (32) being held normally in contact with one of said conductive members (26) by said spring means (34) which are in contact with the other of said conductive members (22) and the magnetic elements (32) being movable out of contact with said one of the conductive member (26) by magnetic interaction with the appropriately encoded magnetic card.

2. A magnetic card reader according to Claim 1 wherein the said one conductive member (26) is made of a non-magnetisable material.

3. A magnetic card reader according to Claim 1 or Claim 2 including an electronic circuit (35,37,39) which provides an output signal indicative of said predetermined condition of the card reader only if such condition is established and maintained for a period of time which exceeds the natural resonant frequency of the magnetic element and spring combination.

4. A magnetic card reader according to any one of the preceding claims wherein an end-of-line resistor (29) is associated with the card reader so that when the magnetic elements (32) are in their open-circuit conditions the reader presents a predetermined resistance to the circuit which is responsive to the reader.

5. A magnetic card reader according to any one of the preceding claims wherein at least one of said conductive members (22,26) comprises a printed circuit board carrying conductive tracks.

6. A magnetic card reader according to Claim 5 wherein said printed circuit board carries circuit elements such as resistors arranged electrically in series with at least some of said magnetic elements.

7. A magnetic card reader according to Claim 1 wherein the area (16) comprises an aperture (16) at one face thereof of the housing (11) for the reception of such card in the plane of the aperture (16), the assembly (10) of magnetic elements (32) being arranged in register with said aperture (16)so that when the card is located correctly in said aperture (16) it is disposed in face-to-face relation with said assembly (10).

8. A magnetic card reader according to Claim 1 wherein the housing (11) is made of, or includes a "window" of magnetically permeable material, and said area (16) is visually defined thereon for the reception of said card, the assembly (10) of magnetic elements (32) being arranged in register with said area (16).

**Revendications**

1. Un lecteur de carte magnétique comprenant un boîtier (11) contenant un ensemble (10) d'éléments magnétiques (32) associés à des contacts électriques respectifs, et un guide pour la réception d'une carte codée magnétiquement, adjacent audit ensemble (10), ledit guide comprenant une zone exposée (16) extérieure au boîtier (11), disposée pour recevoir ladite carte à plat et de façon juxtaposée au boîtier, ledit ensemble (10) étant situé à proximité immédiate de ladite zone, caractérisé en ce que l'ensemble (10) d'éléments magnétiques (32) comprend une paire de pièces espacées (22, 26) électriquement conductrices et, s'étendant entre lesdites pièces conductrices, un certain nombre des éléments magnétiques (32), amenés par des moyens formant ressorts respectifs (34) vers des positions dans lesquelles chacun des éléments (32) établit une connexion électrique entre lesdites pièces conductrices (22, 26) telle que les deux pièces conductrices (22, 26), les moyens formant ressorts (34) et les éléments magnétiques (32) permettent un trajet continu de courant électrique qui est connecté en un circuit électrique (40, 42) sensible à une condition prédéterminée du lecteur de carte, les éléments magnétiques (32) étant maintenus normalement en contact avec une première pièce conductrice (26) par les moyens formant ressorts (34) qui sont en contact avec l'autre pièce conductrice (22), les éléments magnétiques (32) pouvant être séparés de ladite première pièce conductrice (26) par interaction magnétique avec la carte magnétique codée de façon appropriée.

2. Un lecteur de carte magnétique conforme à la revendication 1, dans lequel ladite première pièce conductrice (26) est réalisée en matériau non magnétisable.

3. Un lecteur de carte magnétique conforme à la revendication 1 ou à la revendication 2, comprenant un circuit électronique (35, 37, 39) fournissant un signal de sortie indicatif de ladite condition prédéterminée du lecteur de carte, seulement si cette condition est établie et maintenue pendant une durée dépassant la fréquence naturelle de résonance de la combinaison de l'élément magnétique et du ressort.

4. Un lecteur de carte magnétique conforme à l'une quelconque des revendications précédentes, dans lequel une résistance de fin de ligne (29) est associée au lecteur de carte, de sorte que, lorsque les éléments magnétiques (32) sont dans leurs conditions de circuit ouvert, le lecteur présente une résistance prédéterminée au circuit qui est sensible au lecteur.

5. Un lecteur de carte magnétique conforme à l'une quelconque des revendications précédentes, dans lequel l'une au moins desdites pièces conductrices (22, 26) comprend une carte à circuit imprimé portant des pistes conductrices.

6. Un lecteur de carte magnétique conforme à la revendication 5, dans lequel ladite carte à circuit imprimé porte des éléments de circuit tels que des résistances placées électriquement en série avec au moins certains desdits éléments magnétiques.

7. Un lecteur de carte magnétique conforme à la revendication 1, dans lequel la zone (16) comprend une ouverture (16) sur l'une des faces du boîtier (11), pour la réception de la carte dans le plan de l'ouverture (16) , l'ensemble (10) d'éléments magnétiques (32) étant disposé en relation avec l'ouverture (16), de sorte que, quand la carte est placée correctement dans l'ouverture (I6), elle se trouve face à face avec ledit ensemble (10).

8. Un lecteur de carte magnétique conforme à la revendication 1, dans lequel le boîtier (11) est fabriqué en matériau magnétiquement perméable, ou comprend une "fenêtre" faite d'un tel matériau, et la zone (I6) est définie visuellement sur celui-ci pour la réception de la carte, l'ensemble (10) d'éléments magnétiques (32) étant disposé en relation avec la zone (I6).

## Ansprüche

1. Magnetkartenleser, mit einem Gehäuse (11), welches eine Anordnung (10) magnetischer Elemente (32), die entsprechenden elektrischen Kontakten zugeordnet sind, und eine Führung für die Aufnahme einer magnetisch codierten Karte in der Nähe der Anordnung (10) beinhaltet, wobei die Führung einen nach außerhalb des Gehäuses (11) offenen Bereich (16) aufweist, der dazu ausgelegt ist, die Karte in ebener Anordnung bezüglich des Gehäuses aufzunehmen, und wobei die Anordnung (10) in unmittelbarer Nachbarschaft des Bereiches angeordnet ist, dadurch gekennzeichnet, daß die Anordnung (10) magnetischer Elemente (32) ein Paar beabstandeter elektrisch leitender Teile (22,26) und, sich zwischen den leitenden Teilen erstreckend, eine Mehrzahl der magnetischen Elemente (32) umfaßt, die mittels entsprechender Federmittel (34) in Positionen vorgespannt sind, in welchen jedes der Elemente (32) eine elektrische Verbindung zwischen den leitenden Teilen (22,-26) derart darstellt, daß die beiden leitenden Teile (22,26), die Federmittel (34) und die magnetischen Elemente (32) einen kontinuierlichen Strompfad darstellen, welcher in eine elektrische Schaltung (40,42) eingebunden ist, welche auf einen vorbestimmten Zustand des Kartenlesers anspricht, wobei die magnetischen Elemente (32) normalerweise in Kontakt mit einem der leitenden Teile (26) gehalten sind, und zwar mittels der Federmittel (34), die in Kontakt mit den anderen der leitenden Elemente (22) stehen, und wobei die magnetischen Elemente (32) außer Kontakt mit dem einen der leitenden Teile (26) bewegbar sind, und zwar mittels magnetischer Wechselwirkung mit der entsprechend codierten magnetischen Karte.

2. Magnetischer Kartenleser nach Anspruch 1, wobei das eine leitende Teil (26) aus nicht magnetisierbarem Werkstoff ist.

3. Magnetischer Kartenleser nach Anspruch 1 oder 2, mit einer elektronischen Schaltung (35,37,39), welche nur dann ein Ausgangssignal abgibt, das den vorbestimmten Zustand des Kartenlesers anzeigt, wenn solch ein Zustand auftritt und für eine Zeitspanne erhalten bleibt, welche die natürliche Resonanzfrequenz der Kombination des magnetischen Elementes und der Feder überschreitet.

4. Magnetischer Kartenleser nach einem der vorangehenden Ansprüchen, wobei ein Leitungsabschlußwiderstand (29) dem Kartenleser zugeordnet ist, so daß dann, wenn die magnetischen Elemente (32) in dem Zustand der offenen Schaltung sind, der Leser einen vorbestimmten Widerstand für diejenige Schaltung darstellt, welche auf den Leser reagiert.

5. Magnetischer Kartenleser nach einem der vorangehenden Ansprüchen, wobei mindestens eines der leitenden Teile (22,26) eine gedruckte Schaltungskarte beinhaltet, die leitende Spuren trägt.

6. Magnetischer Kartenleser nach Anspruch 5, wobei die gedruckte Schaltungskarte Schaltungelemente, wie Wider-stände trägt, welche elektrisch in Serie mit wenigstens einigen der magnetischen Elemente verschaltet sind.

7. Magnetischer Kartenleser nach Anspruch 1, wobei der Bereich (16) eine Öffnung (16) an einer Seite des Gehäuses (11) umfaßt für das Aufnehmen einer solchen Karte in der Ebene der Öffnung (16), wobei die Anordnung (10) der magnetischen Elemente (32) derart in Übereinstimmung mit der Öffnung (16) angeordnet ist, daß dann, wenn die Karte korrekt in der Öffnung (16) angeordnet ist, sie gegenüber der Anordnung (10) zu liegen kommt.

8. Magnetischer Kartenleser nach Anspruch 1, wobei das Gehäuse (11) aus magnetisch permeablem Werkstoff hergestellt ist oder ein "Fenster" daraus umfaßt und der Bereich (16) sichtbar darauf ausgebildet ist für die Aufnahme der Karte, wobei die Anordnung (10) magnetische Elemente (32) in Übereinstimmung mit dem Bereich (16) angeordnet ist.

FIG 1

FIG 2